# EUROPEAN PATENT APPLICATION

(11) **EP 4 822 168 A1**
(43) Date of publication of application: **14.10.2026**
(21) Application number: 24920273.0
(22) Date of filing: 17.10.2024
(51) Int. Cl.: F02M 21/02, F02M 21/06

(54) **PURGE DEVICE FOR GAS ENGINE AND OPERATION METHOD FOR PURGE DEVICE**

(30) Priority: 26.01.2024 JP 2024010420
(71) Applicant: MITSUBISHI HEAVY INDUSTRIES ENGINE & TURBOCHARGER, LTD., Sagamihara-shi, Kanagawa 252-5293 (JP)
(72) Inventor: YAMAMOTO, Takayuki, Sagamihara-shi, Kanagawa 252-5293 (JP); WATANABE, Sota, Sagamihara-shi, Kanagawa 252-5293 (JP); FURUKAWA, Yuta, Sagamihara-shi, Kanagawa 252-5293 (JP); NAITO, Keita, Sagamihara-shi, Kanagawa 252-5293 (JP)
(74) Representative: Hoffmann Eitle
(86) International application number: PCT/JP2024/036954
(87) International publication number: WO 2025/158725

(57) **Abstract**

A purge device for a gas engine includes a fuel line that is connected to an engine inlet pipe located most upstream in engine-side fuel piping of the gas engine, the fuel line being for supplying a gas fuel to the gas engine, a fuel shut-off valve that is provided in the fuel line, a purge line that is connected to a purge line connection portion on a downstream side of the fuel line relative to the fuel shut-off valve, the purge line being for supplying an inert gas to the fuel line and the engine-side fuel piping, and a vent line for discharging the gas fuel from the fuel line and the engine-side fuel piping, the vent line being connected to a vent line connection portion on a downstream side of the fuel line relative to the fuel shut-off valve.

## Description

### Technical Field

The present disclosure relates to a purge device for a gas engine and an operation method for a purge device.

The present application claims the right of priority based on Japanese Patent Application No. 2024-010420 filed with the Japan Patent Office on January 26, 2024, the content of which is incorporated herein by reference.

### Background Art

For example, PTL 1 discloses a method of purging a gas fuel from a fuel gas pipe by supplying an inert gas to the fuel gas pipe when the operation of a gas engine is stopped.

### Citation List

### Patent Literature

[PTL 1] Japanese Unexamined Patent Application Publication No. S61-229966

### Summary of Invention

### Technical Problem

However, in the technique disclosed in PTL 1, a pipe (branch pipe) for supplying purge gas for discharging the gas fuel from the fuel gas pipe is connected to a header pipe of the gas engine. Therefore, it is necessary to extend the branch pipe to the gas engine, but it may be difficult to secure a space for disposing the branch pipe around the gas engine, and it may be difficult to attach the branch pipe to the gas engine.

The present disclosure has been made in view of the above-described problems, and an object of the present disclosure is to provide a purge device for a gas engine, which is easily attached to the gas engine, and an operation method for the purge device.

### Solution to Problem

In order to achieve the above object, a purge device for a gas engine according to the present disclosure includes a fuel line that is connected to an engine inlet pipe located most upstream in engine-side fuel piping of the gas engine, the fuel line being for supplying a gas fuel to the gas engine, a fuel shut-off valve that is provided in the fuel line, a purge line that is connected to a purge line connection portion on a downstream side of the fuel line relative to the fuel shut-off valve, the purge line being for supplying an inert gas to the fuel line and the engine-side fuel piping, and a vent line for discharging the gas fuel from the fuel line and the engine-side fuel piping, the vent line being connected to a vent line connection portion on a downstream side of the fuel line relative to the fuel shut-off valve.

### Advantageous Effects of Invention

According to the purge device for a gas engine of the present disclosure, the purge device is easily attached to the gas engine.

### Brief Description of Drawings

FIG. 1 is a diagram schematically showing a configuration of a purge device according to a first embodiment.
FIG. 2 is a diagram for describing an installation position of a mixing promotion device according to the first embodiment.
FIG. 3 is a diagram for describing an installation position of a concentration measurement device according to the first embodiment.
FIG. 4 is a diagram schematically showing a configuration of a purge device according to a second embodiment.
FIG. 5 is a flowchart of an operation method for the purge device according to the first embodiment.
FIG. 6A is a diagram showing a state of the purge device after an engine stopping step according to the first embodiment is executed.
FIG. 6B is a diagram showing a state of the purge device after an opening step according to the first embodiment is executed.
FIG. 6C is a diagram showing a state of the purge device after an inert gas supplying step according to the first embodiment is executed.
FIG. 6D is a diagram showing a state of the purge device after a mixing step according to the first embodiment is executed.
FIG. 6E is a diagram showing a state of the purge device after a discharging step according to the first embodiment is executed.
FIG. 7 is a flowchart of an operation method for the purge device according to the second embodiment.
FIG. 8A is a diagram showing a state of the purge device after an engine stopping step according to the second embodiment is executed.
FIG. 8B is a diagram showing a state of the purge device after an opening step according to the second embodiment is executed.
FIG. 8C is a diagram showing a state of the purge device after a second opening step according to the second embodiment is executed.
FIG. 8D is a diagram showing a state of the purge device after an inert gas supplying step according to the second embodiment is executed.
FIG. 8E is a diagram showing a state of the purge device after a mixing step according to the second embodiment is executed.
FIG. 8F is a diagram showing a state of the purge device after a discharging step according to the second embodiment is executed.

### Description of Embodiments

Hereinafter, a purge device for a gas engine and an operation method for the purge device according to an embodiment of the present disclosure will be described with reference to the drawings. Such embodiments show one aspect of the present disclosure, do not limit this disclosure, and can be optionally changed within the scope of the technical concept of the present disclosure.

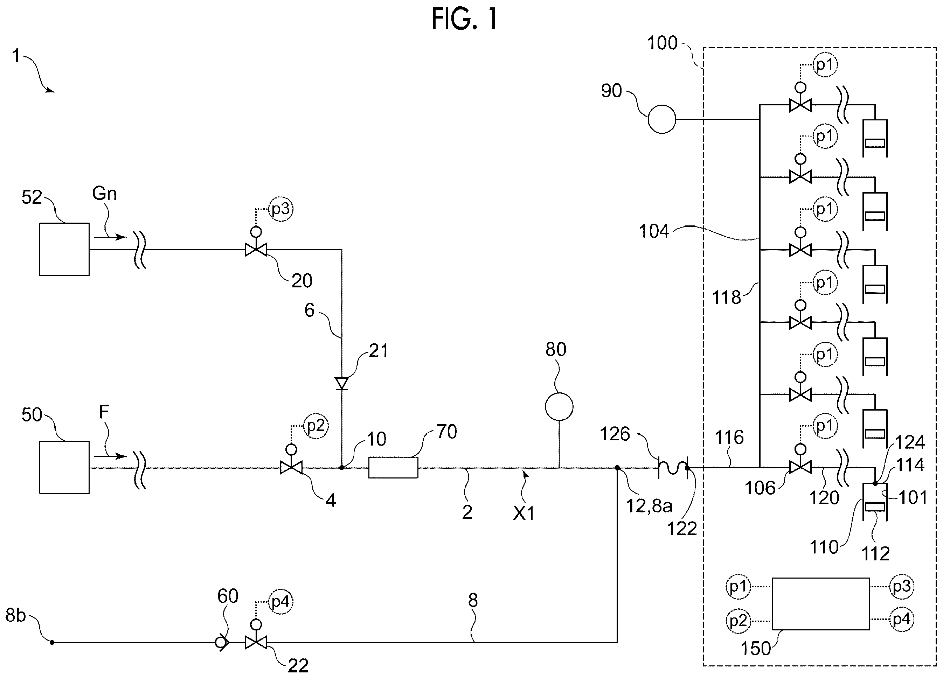

FIG. 1 is a diagram schematically showing a configuration of a purge device 1 according to a first embodiment. As shown in FIG. 1, the purge device 1 is attached to a gas engine 100. An example of a configuration of the gas engine 100 will be described. As shown in FIG. 1, the gas engine 100 includes a combustion chamber 101, engine-side fuel piping 104 that communicates with the combustion chamber 101, a fuel injection valve 106 that is provided in the engine-side fuel piping 104, and a control device 150.

The combustion chamber 101 is defined between a piston 112 and a cylinder head 114 in a cylinder 110. In the form shown in FIG. 1, the gas engine 100 includes a plurality of combustion chambers 101. In some embodiments, the gas engine 100 includes one combustion chamber 101.

In the form shown in FIG. 1, the engine-side fuel piping 104 includes an engine inlet pipe 116, a header pipe 118, and a plurality of (six) branch pipes 120 in order from an upstream side in a direction in which a gas fuel F (described later) flows through the engine-side fuel piping 104.

The engine inlet pipe 116 is located most upstream in the engine-side fuel piping 104 of the gas engine 100. An inlet 122 for causing the gas fuel F to flow into the engine-side fuel piping 104 from the outside of the gas engine 100 is formed in the engine inlet pipe 116. In the present disclosure, one end of the engine-side fuel piping 104 is connected to a flexible pipe 126 (described later), the other end thereof is connected to the cylinder head 114, and an outlet 124 that is open to the combustion chamber 101 is formed at the other end. In some embodiments, the engine-side fuel piping 104 communicates with the combustion chamber 101 via an intake line for causing air to flow into the combustion chamber 101. In this case, the engine-side fuel piping 104 is connected to the intake line.

The header pipe 118 is connected to a downstream end of the engine inlet pipe 116. Each of the plurality of branch pipes 120 is connected to the header pipe 118 such that connection positions thereof are different from each other. The outlet 124 of the engine-side fuel piping 104 is formed at a downstream end of each of the plurality of branch pipes 120. The fuel injection valve 106 is provided in each of the plurality of branch pipes 120. The fuel injection valve 106 is a solenoid valve (p1) that is electrically connected to the control device 150, and is opened at any opening degree or closed in accordance with an instruction transmitted from the control device 150.

The control device 150 is a computer such as an electronic control device, and includes a processor such as a CPU or a GPU (not shown), a memory such as a ROM or a RAM, an I/O interface, and the like. The control device 150 implements each functional unit provided in the control device 150 by the processor operating (performing calculation or the like) in accordance with an instruction of a program loaded in the memory. In some embodiments, the control device 150 is a cloud server provided in a cloud environment.

### <First Embodiment>

### (Configuration)

A configuration of a purge device 1 according to a first embodiment will be described. As shown in FIG. 1, the purge device 1 includes a fuel line 2, a fuel shut-off valve 4, a purge line 6, and a vent line 8. In the first embodiment, the purge device 1 further includes a check valve 60, a mixing promotion device 70, a pressure sensor 80, and a concentration measurement device 90.

The fuel line 2 connects a fuel supply source 50 (fuel tank) in which the gas fuel F is stored to the engine inlet pipe 116. The fuel line 2 is configured such that the gas fuel F can flow from the fuel supply source 50 toward the engine inlet pipe 116, and supplies the gas fuel F to the gas engine 100. The gas fuel F is not particularly limited, and is, for example, hydrogen gas or natural gas. In some embodiments, the gas fuel F is lighter than the atmosphere. In some embodiments, the gas fuel F is lighter than the inert gas Gn. The fuel supply source 50 stores the gas fuel F in a gaseous state. The fuel supply source 50 may store the liquefied gas fuel F (liquid fuel), but in this case, a vaporization device for vaporizing the liquid fuel is provided.

In the first embodiment, the fuel line 2 includes a flexible pipe 126 disposed between the engine inlet pipe 116 and a vent line connection portion 12 (described later). The flexible pipe 126 is connected to the engine inlet pipe 116. That is, the flexible pipe 126 is formed with an outlet of the fuel line 2. The flexible pipe 126 has a corrugated outer shape and is made of a thin-walled metal such as stainless steel. In some embodiments, the flexible pipe 126 is located between an inlet and an outlet of the fuel line 2.

The fuel shut-off valve 4 is provided in the fuel line 2. In the first embodiment, the fuel shut-off valve 4 is a solenoid valve (p2) that is electrically connected to the control device 150, and is opened or closed in accordance with an instruction transmitted from the control device 150. The present disclosure is not limited to the control device 150 of the gas engine 100 controlling the opening and closing of the fuel shut-off valve 4. In some embodiments, the purge device 1 further includes a purge-side control device that is electrically connected to the fuel shut-off valve 4 and that can control the opening and closing of the fuel shut-off valve 4.

The purge line 6 supplies the inert gas Gn to the fuel line 2 and the engine-side fuel piping 104. The inert gas Gn is a gas that does not cause a combustion reaction, and is, for example, nitrogen gas. The purge line 6 connects an inert gas supply source 52 in which the inert gas Gn is stored and the fuel line 2. The purge line 6 is configured such that the inert gas Gn can flow from the inert gas supply source 52 toward the fuel line 2. The purge line 6 is connected to the fuel line 2 on the gas engine 100 side (downstream side of the fuel line 2) relative to the fuel shut-off valve 4. In the present disclosure, a portion of the fuel line 2 to which the purge line 6 is connected is referred to as a purge line connection portion 10.

In the first embodiment, the purge device 1 further includes a purge valve 20 provided in the purge line 6, and a purge check valve 21 provided on the fuel line 2 side (downstream side) of the purge line 6 relative to the purge valve 20. The purge valve 20 is a solenoid valve (p3) that is electrically connected to the control device 150, and is opened or closed in accordance with an instruction transmitted from the control device 150. The purge check valve 21 suppresses the flow of a gas (gas fuel F or inert gas Gn) through the purge line 6 to the inert gas supply source 52.

The vent line 8 is provided to discharge the gas fuel F from the fuel line 2 and the engine-side fuel piping 104. In such a vent line 8, one end 8a is connected to a vent line connection portion 12 on the downstream side of the fuel line 2 relative to the fuel shut-off valve 4, and the other end 8b is open to the atmosphere. In the first embodiment, the vent line 8 is disposed above the fuel line 2.

In the first embodiment, the purge device 1 further includes a vent valve 22 provided in the vent line 8. The vent valve 22 is a solenoid valve (p4) that is electrically connected to the control device 150, and is opened or closed in accordance with an instruction transmitted from the control device 150.

The check valve 60 is provided on the other end 8b side (downstream side) of the vent line 8 relative to the vent valve 22. The check valve 60 suppresses the flow of a gas (atmosphere) through the vent line 8 to the fuel line 2.

The mixing promotion device 70 is provided on the gas engine 100 side (downstream side of the fuel line 2) of the fuel line 2 relative to the fuel shut-off valve 4. The mixing promotion device 70 is, for example, a swirl flow generation device, and imparts a swirl force to the inert gas Gn flowing through the fuel line 2. The inert gas Gn is mixed with the gas fuel F by being imparted with the swirl force, and the concentration of the gas fuel F in a portion of the fuel line 2 on the downstream side relative to the fuel shut-off valve 4 and a portion of the engine-side fuel piping 104 on the upstream side relative to the fuel injection valve 106 (hereinafter, this portion is referred to as a first purge target section X1) is made uniform. The mixing promotion device 70 is not limited to the swirl flow generation device. For example, the mixing promotion device 70 may include a plurality of baffle plates with which the inert gas Gn collides, and may form turbulence in the fuel line 2.

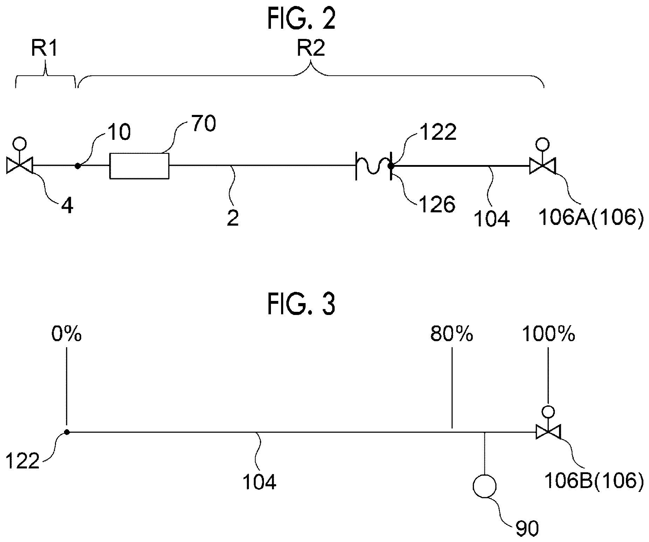

The installation position of the mixing promotion device 70 will be described. FIG. 2 is a diagram for describing the installation position of the mixing promotion device 70 according to the first embodiment. The fuel injection valve 106A (106) shown in FIG. 2 is the fuel injection valve 106 closest to the inlet 122 of the engine-side fuel piping 104 among the plurality of fuel injection valves 106. As shown in FIG. 2, the purge line connection portion 10 divides a region from the fuel shut-off valve 4 to the fuel injection valve 106A into a first region R1 and a second region R2 larger than the first region R1. The mixing promotion device 70 is disposed on the purge line connection portion 10 side of the second region R2. In one embodiment, the mixing promotion device 70 is disposed immediately downstream of the purge line connection portion 10.

The pressure sensor 80 is provided on the gas engine 100 side (downstream side of the fuel line 2) of the fuel line 2 relative to the fuel shut-off valve 4, and measures the air pressure. In the first embodiment, the pressure sensor 80 is disposed between the purge line connection portion 10 and the vent line connection portion 12 and on the downstream side of the mixing promotion device 70. The pressure sensor 80 is electrically connected to the control device 150, and transmits a measured value to the control device 150. Although not shown, the purge device 1 further includes a filter that is provided in the fuel line 2 and that suppresses the intrusion of foreign matter into the gas engine 100. The filter is provided in the fuel line 2, for example, to be located between the mixing promotion device 70 and the pressure sensor 80.

The concentration measurement device 90 is provided on the upstream side of the engine-side fuel piping 104 relative to the fuel injection valve 106, and measures the concentration of a component (for example, hydrogen) contained in the gas fuel F. In the first embodiment, the concentration measurement device 90 is provided in the header pipe 118, and measures the concentration of the gas fuel F in the header pipe 118. The concentration measurement device 90 is electrically connected to the control device 150, and transmits a measured value to the control device 150.

The installation position of the concentration measurement device 90 will be described. FIG. 3 is a diagram for describing the installation position of the concentration measurement device 90 according to the first embodiment. The fuel injection valve 106B (106) shown in FIG. 3 is the fuel injection valve 106 farthest from the inlet 122 of the engine-side fuel piping 104 among the plurality of fuel injection valves 106. In FIG. 3, a flow path from the inlet 122 of the engine-side fuel piping 104 to the fuel injection valve 106B is shown in a linear shape. As shown in FIG. 3, the inlet 122 of the engine-side fuel piping 104 is defined as a position of 0% with respect to the length of the flow path from the inlet 122 of the engine-side fuel piping 104 to the fuel injection valve 106B, and a position increases toward the fuel injection valve 106B, and the installation position of the fuel injection valve 106B is defined as a position of 100% with respect to the length of the flow path. In this case, the installation position of the concentration measurement device 90 is included in a range of 80% or more and less than 100% with respect to the length of the flow path.

### (Operations and Effects)

The operations and effects of the purge device 1 according to the first embodiment will be described. By connecting the vent line 8 to the header pipe 118 of the gas engine 100, there is a possibility that the discharge of the gas fuel F from the first purge target section X1 is facilitated. However, various members are disposed around the gas engine 100, and it is not easy to secure a space for connecting the vent line 8 to the header pipe 118, and it is difficult to attach the purge device 1 to the gas engine 100. On the other hand, according to the first embodiment, since the vent line 8 is connected to the fuel line 2, the vent line 8 is disposed to be spaced apart from the gas engine 100. Therefore, interference of the vent line 8 with a member constituting the outer peripheral portion of the gas engine 100 or a member disposed around the gas engine 100 is suppressed. Therefore, the purge device 1 is easily attached to the gas engine 100.

According to the first embodiment, since the purge device 1 includes the mixing promotion device 70, when the inert gas Gn is supplied to the fuel line 2, the mixing of the inert gas Gn and the gas fuel F is promoted, and the discharge of the gas fuel F from the first purge target section X1 can be accelerated.

According to the first embodiment, since the mixing promotion device 70 is disposed on the purge line connection portion 10 side of the second region R2, the inert gas Gn flowing in from the purge line connection portion 10 flows through the mixing promotion device 70 and then flows toward a side opposite to the purge line connection portion 10 side of the second region R2. Therefore, since a space for promoting the mixing of the inert gas Gn and the gas fuel F is largely secured, the mixing of the inert gas Gn and the gas fuel F can be efficiently performed.

According to the first embodiment, since the purge line 6 is connected to the purge line connection portion 10 of the fuel line 2, the purge line 6 is also disposed apart from the gas engine 100, similarly to the vent line 8, and interference of the purge line with and members constituting an outer peripheral portion of the gas engine 100 or members disposed around the gas engine 100 is suppressed. Therefore, the purge device 1 is more easily attached to the gas engine 100.

According to the first embodiment, since the fuel line 2 includes the flexible pipe 126, the transmission of the vibration of the gas engine 100 to the vent line 8 is suppressed, and the damage to the vent line 8 can be suppressed.

According to the first embodiment, since the purge device 1 includes the check valve 60, it is possible to prevent the atmosphere from flowing into the fuel line 2 via the vent line 8.

According to the first embodiment, since the vent line 8 is located above the fuel line 2, for example, when the gas fuel F is a lightweight gas fuel F such as hydrogen gas, the gas fuel F is easily caused to flow from the fuel line 2 to the vent line 8. Although not shown, in some embodiments, the vent line 8 includes an upwardly extending portion that extends upward toward the other end 8b. According to such a configuration, the lightweight gas fuel F such as hydrogen gas can be smoothly guided to the outside of the purge device 1.

According to the first embodiment, since the purge device 1 includes the pressure sensor 80, it is possible to detect whether or not an abnormality has occurred in the fuel injection valve 106, the fuel shut-off valve 4, or the like based on the measured value of the pressure sensor 80, or to confirm whether or not the gas fuel F is discharged from the first purge target section X1 to the vent line 8.

In a case where the vent line connection portion 12 is located on the downstream side of the fuel line 2 relative to the fuel shut-off valve 4 and the purge line connection portion 10 is located on the downstream side of the fuel line 2 relative to the fuel shut-off valve 4, the gas fuel F in the engine-side fuel piping 104 is less likely to be discharged than the gas fuel F in the fuel line 2. According to the first embodiment, since the purge device 1 includes the concentration measurement device 90 (provided in the header pipe 118), it is possible to confirm that the gas fuel F is discharged from the engine-side fuel piping 104 based on the measured value of the concentration measurement device 90.

### <Second Embodiment>

A purge device 1 according to a second embodiment of the present disclosure will be described. The purge device 1 according to the second embodiment is different from the first embodiment in that the purge device 1 further includes a second fuel shut-off valve 24, a second purge line 26, and a second vent line 28. In the second embodiment, the same components as those in the first embodiment are denoted by the same reference signs, and the detailed descriptions thereof will not be repeated.

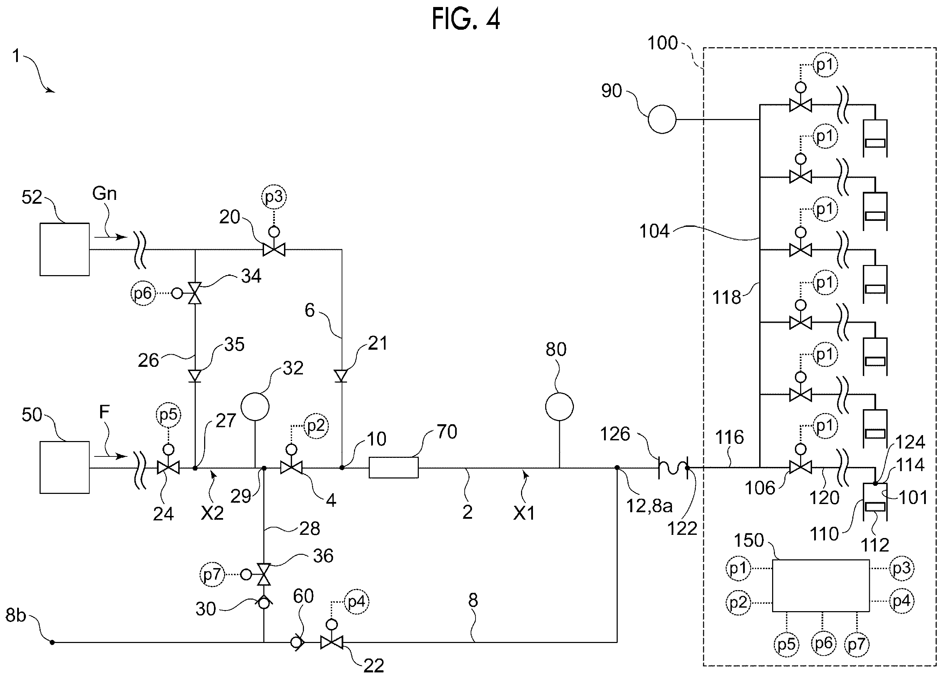

FIG. 4 is a diagram schematically showing a configuration of the purge device 1 according to the second embodiment. As shown in FIG. 4, the purge device 1 further includes a second fuel shut-off valve 24, a second purge line 26, a second vent line 28, a second check valve 30, and a second pressure sensor 32.

The second fuel shut-off valve 24 is provided on a side (upstream side) opposite to the gas engine 100 side of the fuel line 2 relative to the fuel shut-off valve 4. In the second embodiment, the second fuel shut-off valve 24 is a solenoid valve (p5) that is electrically connected to the control device 150, and is opened or closed in accordance with an instruction transmitted from the control device 150.

The second purge line 26 supplies the inert gas Gn to the fuel line 2. The second purge line 26 branches from the upstream side of the purge valve 20 of the purge line 6, and is connected to a portion of the fuel line 2 (hereinafter, this portion is referred to as a second purge target section X2) between the fuel shut-off valve 4 and the second fuel shut-off valve 24. The second purge line 26 is configured such that the inert gas Gn can flow toward the fuel line 2. In the present disclosure, a portion of the fuel line 2 to which the second purge line 26 is connected is referred to as a second purge line connection portion 27.

In the second embodiment, the purge device 1 further includes a second purge valve 34 provided in the second purge line 26, and a second purge check valve 35 provided on the fuel line 2 side (downstream side) of the second purge line 26 relative to the second purge valve 34. The second purge valve 34 is a solenoid valve (p6) that is electrically connected to the control device 150, and is opened or closed in accordance with an instruction transmitted from the control device 150. The second purge check valve 35 suppresses the flow of a gas (gas fuel F or inert gas Gn) through the second purge line 26 to the inert gas supply source 52.

The second vent line 28 is provided to discharge the gas fuel F from the fuel line 2. In such a second vent line 28, one end is connected to the second purge target section X2, and the other end is connected to the other end 8b side (downstream side) of the vent line 8 relative to the check valve 60. In the second embodiment, the second vent line 28 is disposed above the fuel line 2.

In the second embodiment, the purge device 1 further includes a second vent valve 36 provided in the second vent line 28. The second vent valve 36 is a solenoid valve (p7) that is electrically connected to the control device 150, and is opened or closed in accordance with an instruction transmitted from the control device 150.

The second check valve 30 is provided on the vent line 8 side of the second vent line 28 relative to the second vent valve 36. The second check valve 30 suppresses the flow of a gas (atmosphere) through the second vent line 28 to the fuel line 2.

The second pressure sensor 32 is provided in the second purge target section X2, and measures the air pressure. In the second embodiment, the second pressure sensor 32 is disposed between the second purge line connection portion 27 and the second vent line connection portion 29. The second pressure sensor 32 is electrically connected to the control device 150, and transmits a measured value to the control device 150.

### (Operations and Effects)

The operations and effects of the purge device 1 according to the second embodiment will be described. According to the second embodiment, since the purge device 1 includes the second fuel shut-off valve 24, the second purge line 26, and the second vent line 28, the gas fuel F included in the second purge target section X2 can be discharged. According to the second embodiment, the discharge of the gas fuel F included in the first purge target section X1 and the discharge of the gas fuel F included in the second purge target section X2 are performed in parallel, so that the completion of the purge can be accelerated.

According to the second embodiment, since the purge device 1 includes the second check valve 30, the inflow of the atmosphere into the fuel line 2 via the second vent line 28 can be prevented.

According to the second embodiment, since the second vent line 28 is located above the fuel line 2, the lightweight gas fuel F such as hydrogen gas is easily caused to flow from the fuel line 2 to the second vent line 28. Although not shown, in some embodiments, the second vent line 28 includes a second upwardly extending portion that extends upward toward the other end opposite to one end connected to the fuel line 2. According to such a configuration, the lightweight gas fuel F such as hydrogen gas can be smoothly guided.

According to the second embodiment, since the purge device 1 includes the second pressure sensor 32, it is possible to detect whether or not an abnormality has occurred in the fuel shut-off valve 4, the second fuel shut-off valve 24, or the like based on the measured value of the second pressure sensor 32, or to confirm whether or not the gas fuel F is discharged from the second purge target section X2 to the second vent line 28.

### <Operation Method for Purge Device>

A method of discharging the gas fuel F from the fuel line 2 and the engine-side fuel piping 104 in a case where the operation of the gas engine 100 is stopped will be described for each of the purge device 1 according to the first embodiment and the purge device 1 according to the second embodiment. During the operation of the gas engine 100, the fuel shut-off valve 4 and the second fuel shut-off valve 24 are opened, and the purge valve 20, the vent valve 22, the second purge valve 34, and the second vent valve 36 are closed. The fuel injection valve 106 is opened or closed in accordance with the rotation speed or a process of the gas engine 100.

### (First Embodiment)

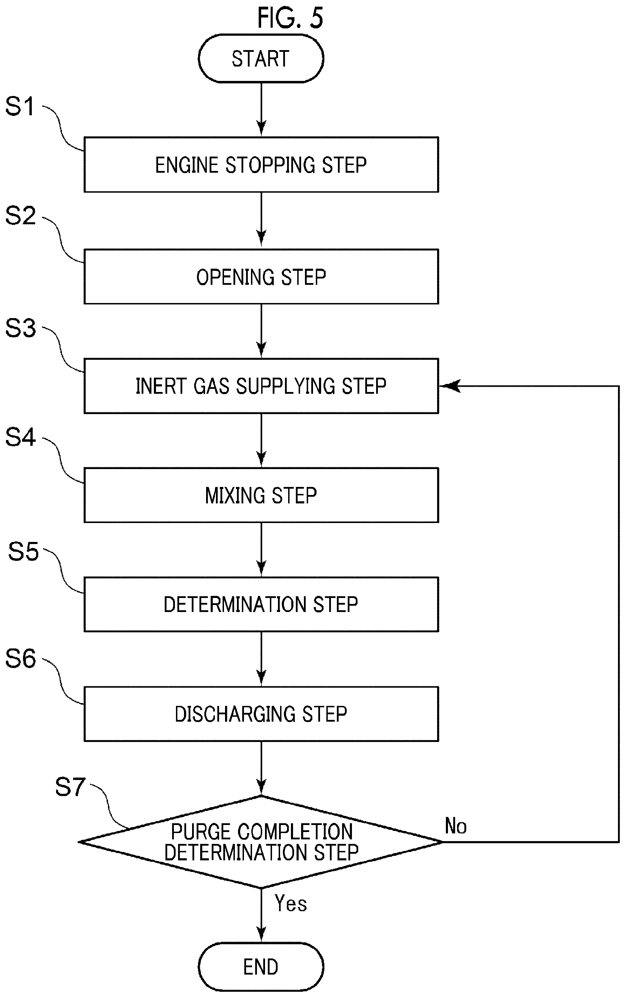

FIG. 5 is a flowchart of an operation method for the purge device 1 according to the first embodiment. As shown in FIG. 5, the operation method for the purge device 1 according to the first embodiment includes an engine stopping step S1, an opening step S2, an inert gas supplying step S3, a mixing step S4, a determination step S5, a discharging step S6, and a purge completion determination step S7.

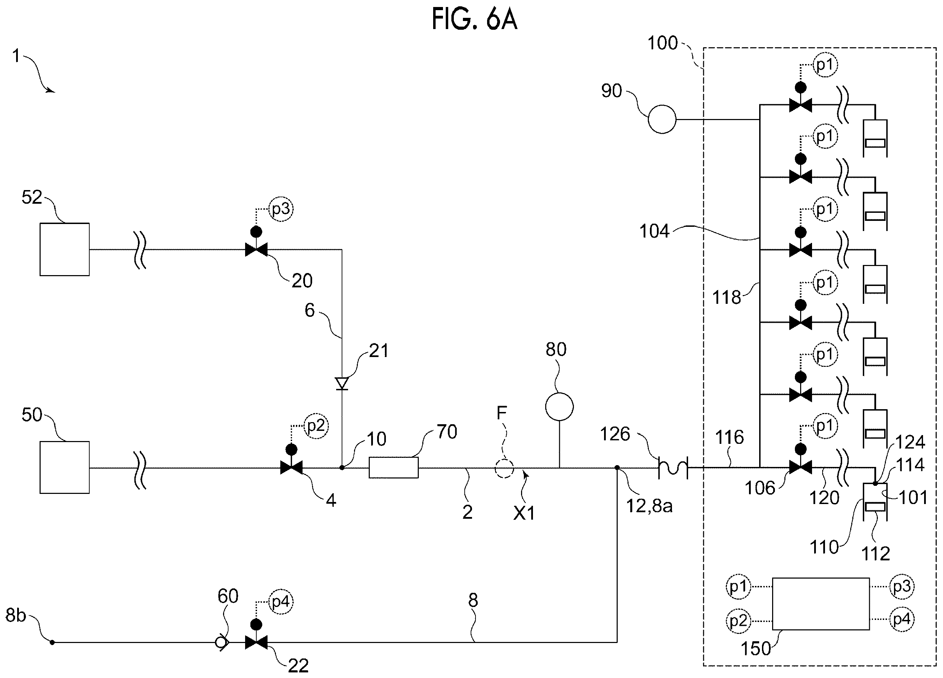

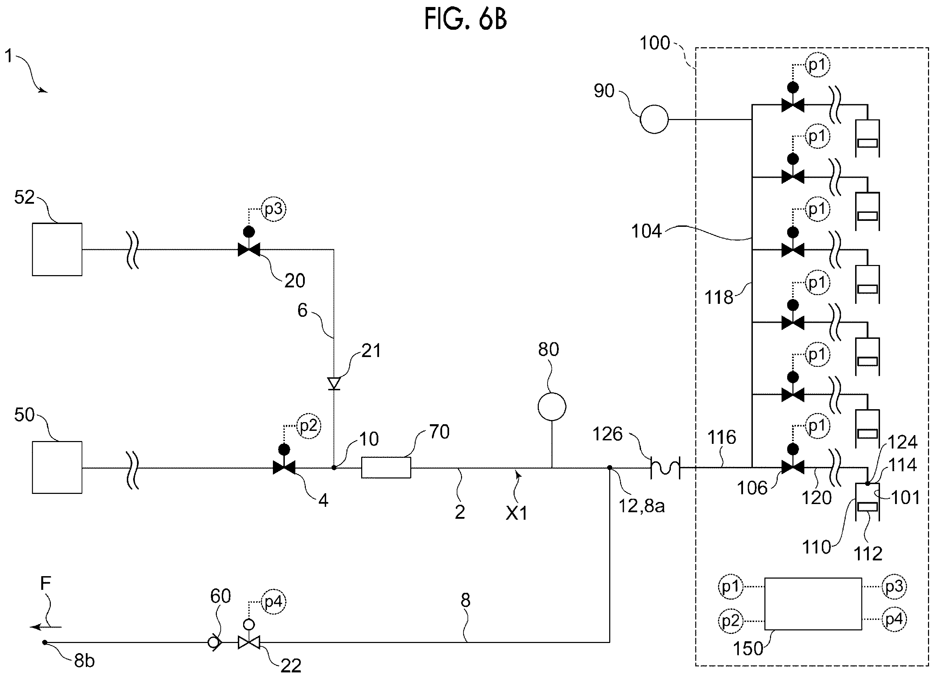

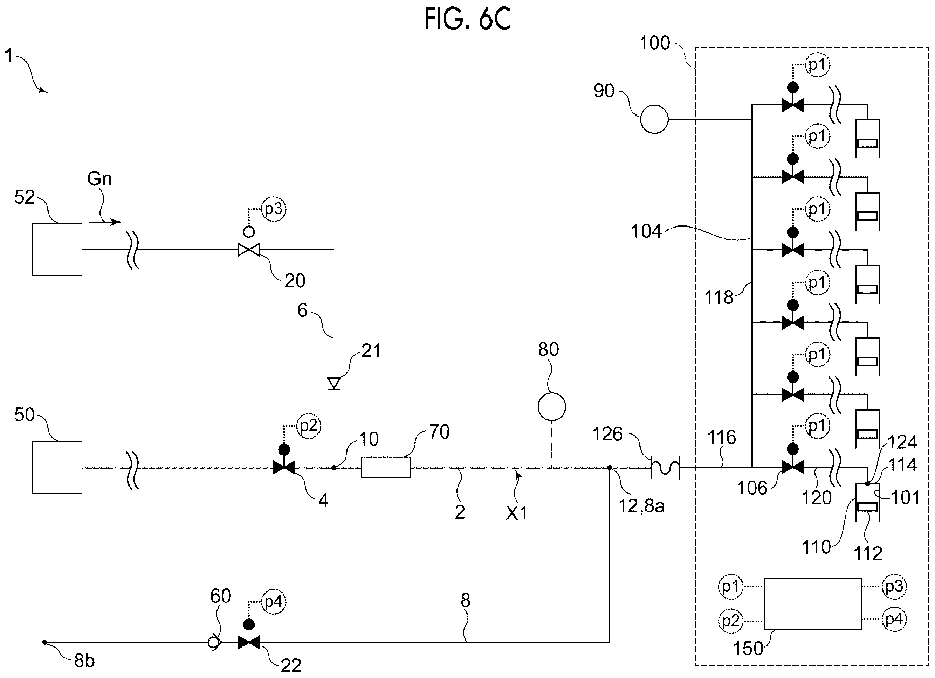

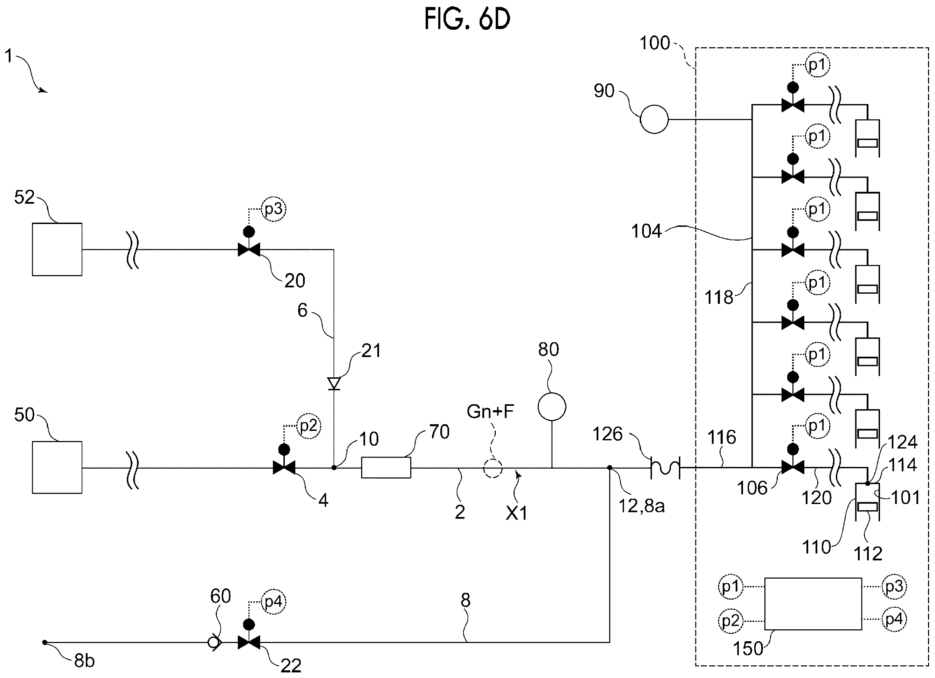

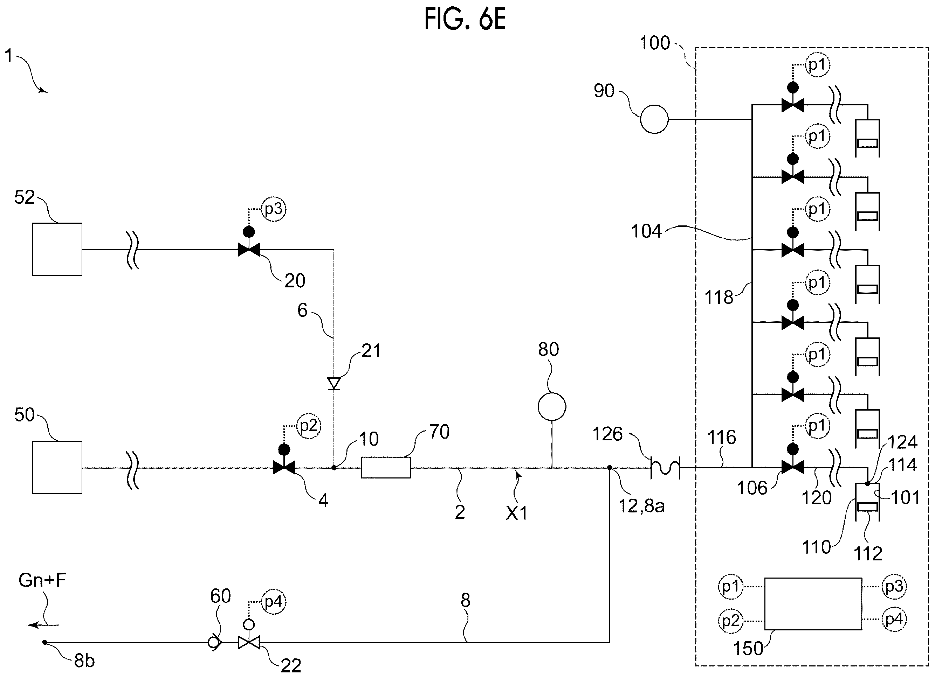

FIG. 6A is a diagram showing a state of the purge device 1 after the engine stopping step S1 is executed. FIG. 6B is a diagram showing a state of the purge device 1 after the opening step S2 is executed. FIG. 6C is a diagram showing a state of the purge device 1 after the inert gas supplying step S3 is executed. FIG. 6D is a diagram showing a state of the purge device 1 after the mixing step S4 is executed. FIG. 6E is a diagram showing a state of the purge device 1 after the discharging step S6 is executed. In FIGS. 6A to 6E, in a case where the fuel shut-off valve 4, the purge valve 20, the vent valve 22, and the fuel injection valve 106 are each opened, the symbol is painted white, and in a case where the fuel shut-off valve 4, the purge valve 20, the vent valve 22, and the fuel injection valve 106 are each closed, the symbol is painted black.

In the engine stopping step S1, the fuel shut-off valve 4 and the fuel injection valve 106 are closed. In the first embodiment, when the operation of the gas engine 100 is stopped, the control device 150 transmits a valve close instruction to each of the fuel shut-off valve 4 and the fuel injection valve 106. Each of the fuel shut-off valve 4 and the fuel injection valve 106 receives the valve close instruction and is closed. Therefore, as shown in FIG. 6A, each of the fuel shut-off valve 4, the purge valve 20, the vent valve 22, and the fuel injection valve 106 is in a closed state. Then, the gas fuel F remains in the first purge target section X1. In some embodiments, the control device 150 can detect the shutdown of the gas engine 100, and detect, for example, that a power supply (not shown) is turned off.

In the opening step S2, the vent valve 22 is opened after the engine stopping step S1. In the first embodiment, the control device 150 transmits a valve open instruction to the vent valve 22 after the fuel shut-off valve 4 and the fuel injection valve 106 are closed by the shutdown of the gas engine 100. The vent valve 22 receives the valve open instruction and is opened. Therefore, as shown in FIG. 6B, each of the fuel shut-off valve 4, the purge valve 20, and the fuel injection valve 106 is in a closed state, and the vent valve 22 is in an open state. Then, a part of the gas fuel F remaining in the first purge target section X1 is discharged to the atmosphere via the vent line 8.

In the inert gas supplying step S3, the vent valve 22 is closed and the purge valve 20 is opened after the opening step S2. In the first embodiment, after the vent valve 22 is opened, a valve close instruction is transmitted to the vent valve 22, and a valve open instruction is transmitted to the purge valve 20. The vent valve 22 receives the valve close instruction and is closed. The purge valve 20 receives the valve open instruction and is opened. The purge valve 20 is opened after the vent valve 22 is closed. Therefore, as shown in FIG. 6C, each of the fuel shut-off valve 4, the vent valve 22, and the fuel injection valve 106 is in a closed state, and the purge valve 20 is in an open state. Then, the inert gas Gn is supplied to the fuel line 2.

In the mixing step S4, the purge valve 20 is closed after the inert gas supplying step S3 to mix the inert gas Gn and the gas fuel F. In the first embodiment, the control device 150 transmits the valve close instruction to the purge valve 20 after the purge valve 20 is opened. The purge valve 20 receives the valve close instruction and is closed. Therefore, as shown in FIG. 6D, each of the fuel shut-off valve 4, the purge valve 20, the vent valve 22, and the fuel injection valve 106 is in a closed state, and the first purge target section X1 is in a sealed state. Further, the control device 150 maintains the sealed state of the first purge target section X1 for a predetermined time. The predetermined time may be a constant value set in advance or may be a variable determined based on the measured value of the pressure sensor 80. In a case where the sealed state of the first purge target section X1 is maintained for the predetermined time, the gas fuel F and the inert gas Gn included in the first purge target section X1 are sufficiently mixed.

In the determination step S5, it is determined whether or not an abnormality has occurred in at least one of the vent valve 22 and the fuel injection valve 106 based on the rate of decrease in the measured value of the pressure sensor 80 between the mixing step S4 and the discharging step S6. In the first embodiment, the control device 150 acquires the measured value of the pressure sensor 80 while the first purge target section X1 is in the sealed state. Then, the control device 150 calculates the rate of decrease in the measured value of the pressure sensor 80, and determines that an abnormality has occurred in at least one of the vent valve 22 and the fuel injection valve 106 in a case where the calculated rate of decrease is larger than a value set in advance. That is, it is possible to detect the leakage of the gas fuel F into the combustion chamber 101 or the atmosphere. In some embodiments, the operation method further includes a notification step of notifying of the occurrence of the abnormality in a case where it is determined that the abnormality has occurred in the determination step S5. Even in a case where the rate of decrease in the measured value of the pressure sensor 80 is larger than the set value despite the fact that the abnormality has not occurred in each of the vent valve 22 and the fuel injection valve 106, it is possible to detect the damage to the engine inlet pipe 116, the flexible pipe 126, or the like.

In the discharging step S6, the vent valve 22 is opened after the mixing step S4. In the first embodiment, the control device 150 transmits the valve open instruction to the vent valve 22 after a predetermined time has elapsed since the first purge target section X1 is brought into the sealed state. The vent valve 22 receives the valve open instruction and is opened. Therefore, as shown in FIG. 6E, each of the fuel shut-off valve 4, the purge valve 20, and the fuel injection valve 106 is in a closed state, and the vent valve 22 is in an open state. Then, the gas fuel F included in the first purge target section X1 is discharged to the atmosphere together with the inert gas Gn via the vent line 8.

In the purge completion determination step S7, after the discharging step S6, when the number of times the discharging step S6 has been executed exceeds a predetermined number of times (purge completion determination step S7: Yes), it is determined that the gas fuel F has been discharged, and when the number of times the discharging step S6 has been executed is equal to or less than the predetermined number of times (purge completion determination step S7: No), the process returns to the inert gas supplying step S3.

In the purge completion determination step S7, it is determined whether or not the gas fuel F has been discharged based on the number of times the discharging step S6 is executed, but the present disclosure is not limited to this form. In some embodiments, in the purge completion determination step S7, after the discharging step S6, it is determined whether or not the gas fuel F has been discharged based on a rate of decrease in the measured value of the pressure sensor 80. Specifically, the control device 150 acquires the measured value of the pressure sensor 80 until a certain period of time elapses after the vent valve 22 is opened. Then, the control device 150 calculates the rate of decrease in the measured value of the pressure sensor 80, and when the calculated rate of decrease is smaller than a value set in advance (purge completion determination step S7: Yes), it is determined that the gas fuel F has been discharged from the first purge target section X1. When the rate of decrease in the measured value of the pressure sensor 80 is larger than the value set in advance (purge completion determination step S7: No), the control device 150 determines that the gas fuel F remains in the first purge target section X1, and returns to the inert gas supplying step S3. This method utilizes the fact that, when discharge of the gas fuel F progresses and the concentration of the inert gas Gn in the mixed gas (gas fuel F + inert gas Gn) increases, the density of the mixed gas increases, thereby decreasing the discharge rate of the mixed gas (that is, decreasing the rate of decrease in the measured value of the pressure sensor 80). In some embodiments, in the purge completion determination step S7, after the discharging step S6, it is determined whether or not the gas fuel F has been discharged based on the measured value of the concentration measurement device 90. That is, in the purge completion determination step S7, after the discharging step S6, when the measured value of the concentration measurement device 90 is lower than a predetermined concentration, it is determined that the gas fuel F has been discharged.

According to the operation method for the purge device 1 according to the first embodiment, when the gas engine 100 is stopped, the gas fuel F can be discharged from the first purge target section X1. In the purge device 1 according to the first embodiment, since the vent line 8 is connected to the fuel line 2, the gas fuel F is likely to remain in the engine-side fuel piping 104. According to the operation method for the purge device 1 according to the first embodiment, in the mixing step S4, the gas fuel F and the inert gas Gn are mixed, and then in the discharging step S6, the gas fuel F is discharged together with the inert gas Gn. Therefore, the gas fuel F in the engine-side fuel piping 104 can be efficiently discharged.

According to the operation method for the purge device 1 according to the first embodiment, since the determination step S5 is executed, it is possible to know whether or not an abnormality has occurred in at least one of the vent valve 22 and the fuel injection valve 106.

According to the operation method for the purge device 1 according to the first embodiment, since the purge completion determination step S7 is executed, a timing for ending the operation of the purge device 1 can be set.

### (Second Embodiment)

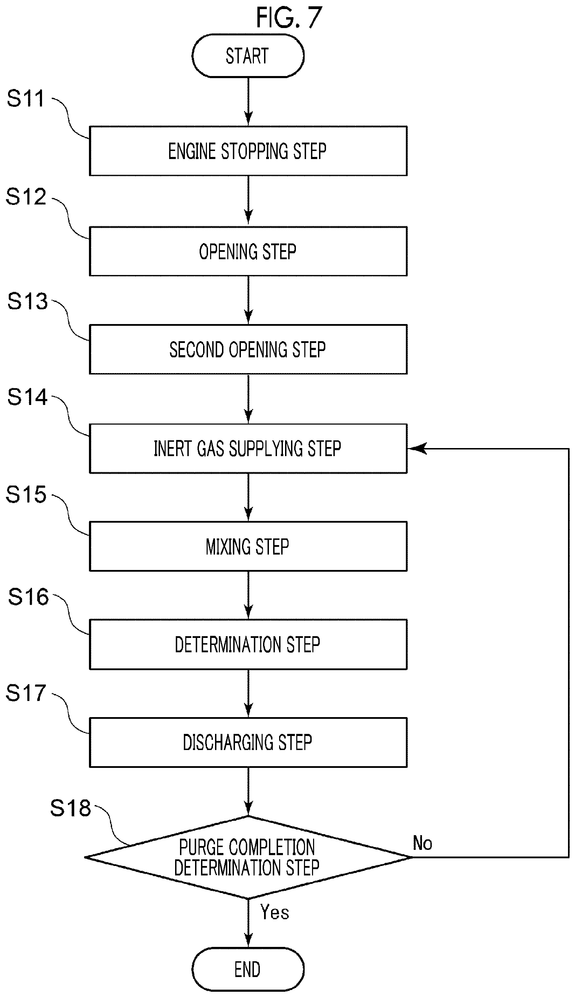

An operation method for the purge device 1 according to the second embodiment will be described. FIG. 7 is a flowchart of an operation method for the purge device 1 according to the second embodiment. As shown in FIG. 7, the operation method for the purge device 1 according to the second embodiment includes an engine stopping step S11, an opening step S12, a second opening step S13, an inert gas supplying step S14, a mixing step S15, a determination step S16, a discharging step S17, and a purge completion determination step S18.

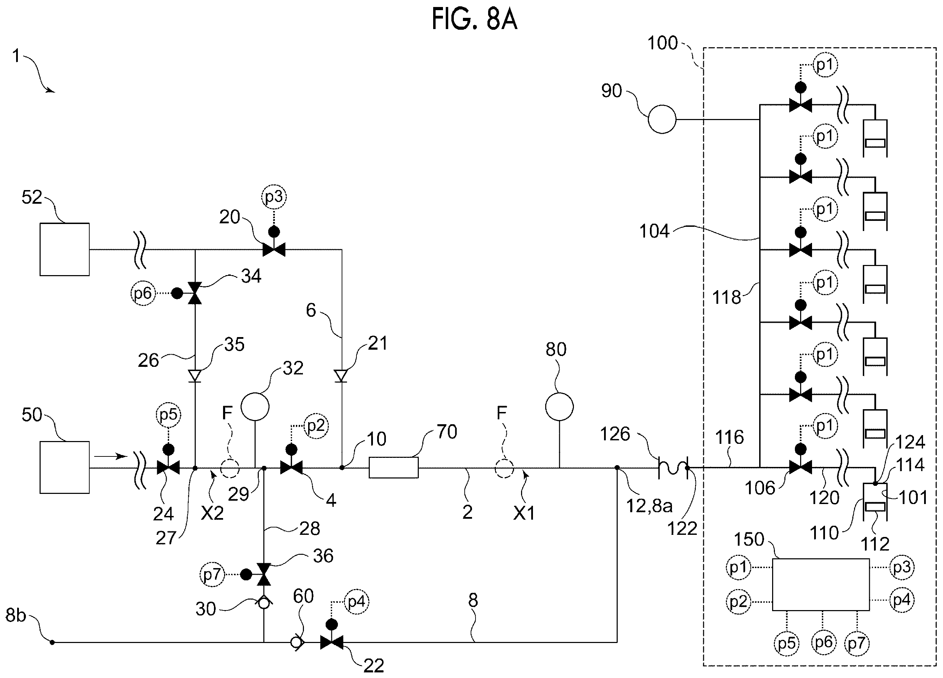

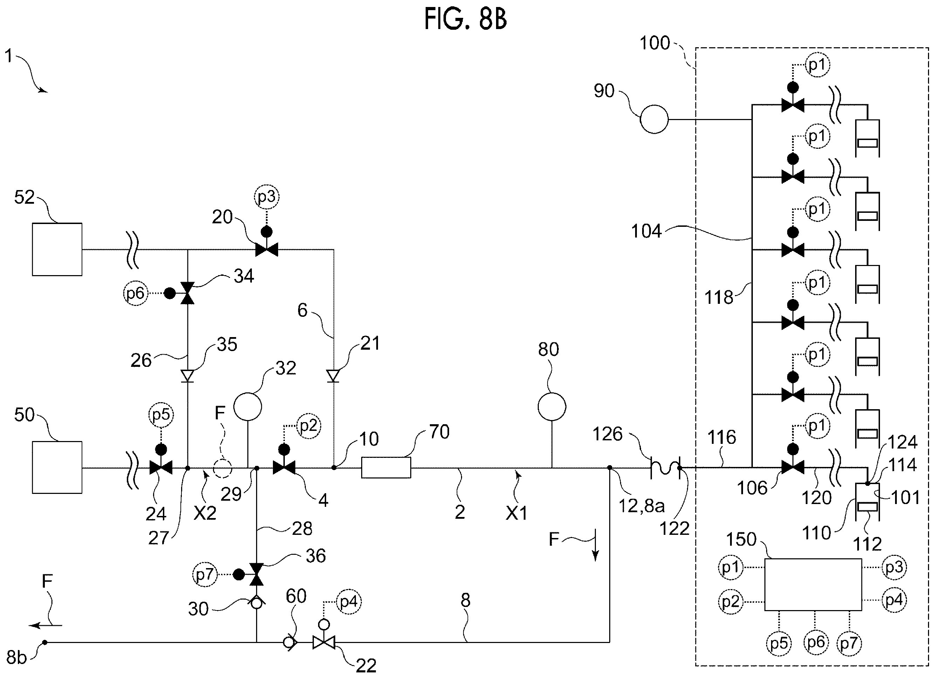

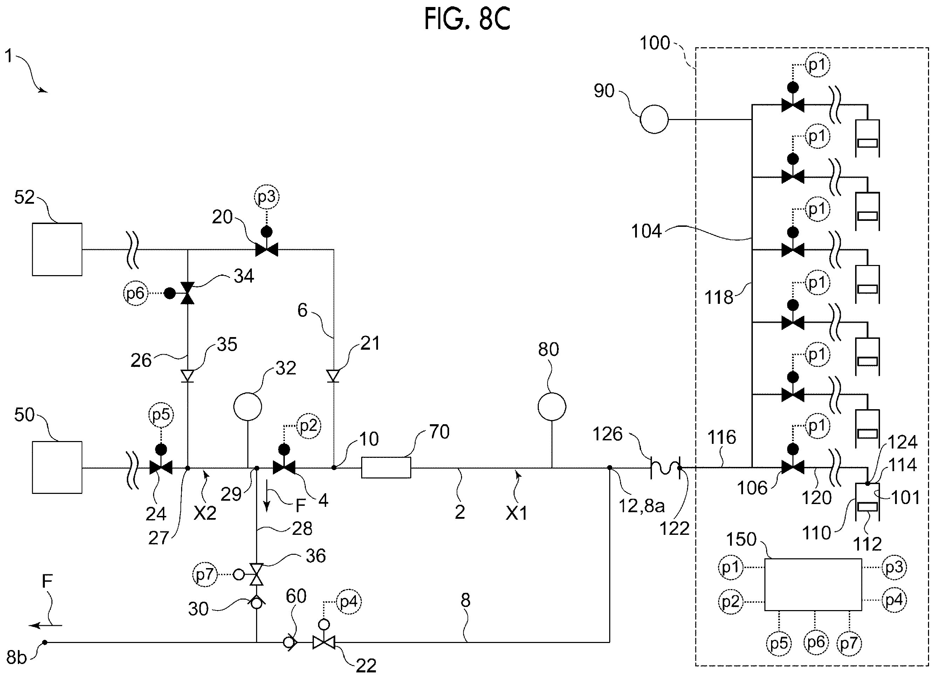

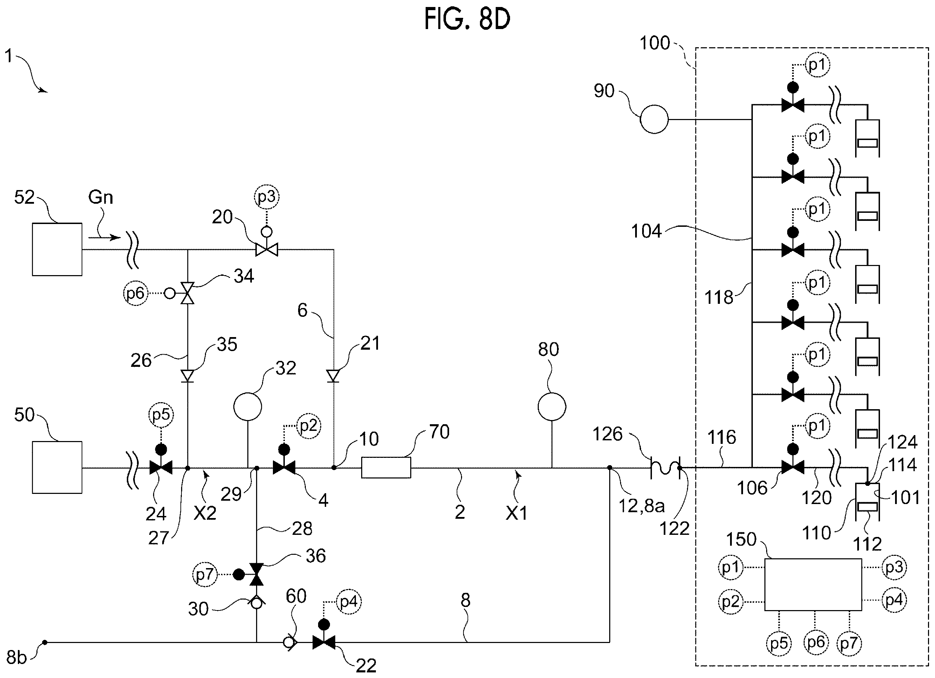

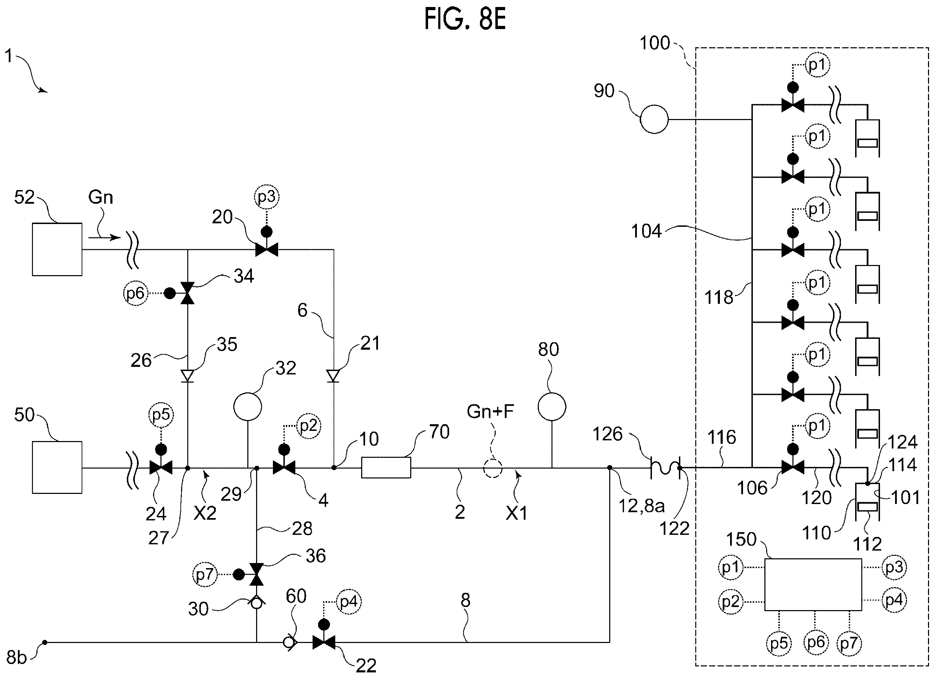

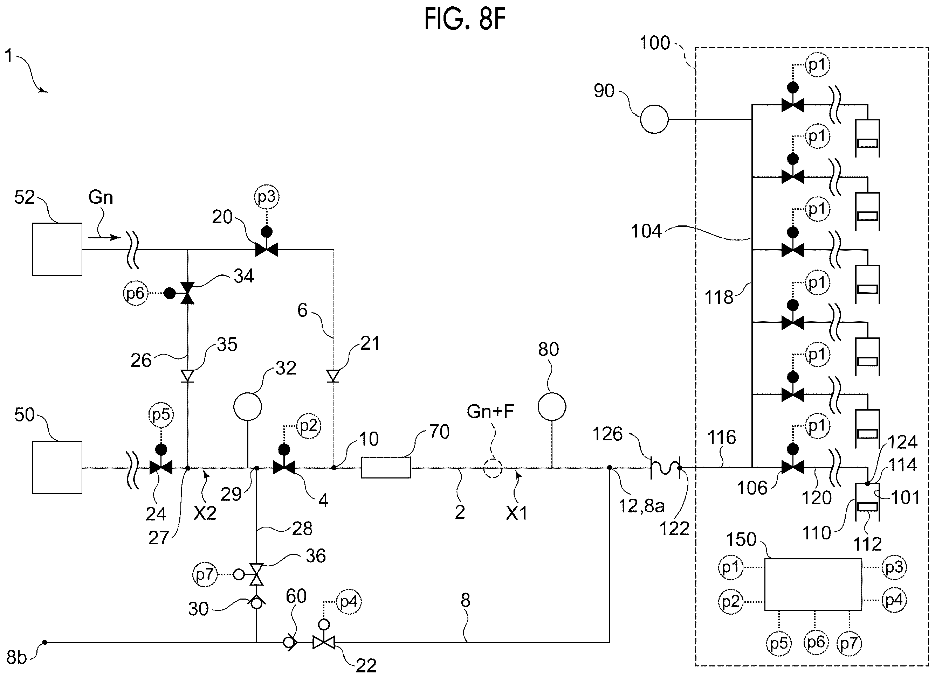

FIG. 8A is a diagram showing a state of the purge device 1 after the engine stopping step S11 is executed. FIG. 8B is a diagram showing a state of the purge device 1 after the opening step S12 is executed. FIG. 8C is a diagram showing a state of the purge device 1 after the second opening step S13 is executed. FIG. 8D is a diagram showing a state of the purge device 1 after the inert gas supplying step S14 is executed. FIG. 8E is a diagram showing a state of the purge device 1 after the mixing step S15 is executed. FIG. 8F is a diagram showing a state of the purge device 1 after the discharging step S17 is executed. In FIGS. 8A to 8F, in a case where the fuel shut-off valve 4, the purge valve 20, the vent valve 22, the second fuel shut-off valve 24, the second purge valve 34, the second vent valve 36, and the fuel injection valve 106 are each opened, the symbol is painted white, and in a case where the fuel shut-off valve 4, the purge valve 20, the vent valve 22, the second fuel shut-off valve 24, the second purge valve 34, the second vent valve 36, and the fuel injection valve 106 are each closed, the symbol is painted black.

In the engine stopping step S11, the fuel shut-off valve 4, the second fuel shut-off valve 24, and the fuel injection valve 106 are closed. In the second embodiment, in a case where the operation of the gas engine 100 is stopped, the control device 150 transmits a valve close instruction to each of the fuel shut-off valve 4, the second fuel shut-off valve 24, and the fuel injection valve 106. Each of the fuel shut-off valve 4, the second fuel shut-off valve 24, and the fuel injection valve 106 receives the valve close instruction and is closed. Therefore, as shown in FIG. 8A, each of the fuel shut-off valve 4, the second fuel shut-off valve 24, the purge valve 20, the vent valve 22, the second purge valve 34, the second vent valve 36, and the fuel injection valve 106 is in a closed state. Then, the gas fuel F remains in the first purge target section X1 and the second purge target section X2. In some embodiments, the control device 150 can detect the shutdown of the gas engine 100, and detect, for example, that a power supply (not shown) is turned off.

In the opening step S12, the vent valve 22 is opened after the engine stopping step S11. In the second embodiment, the control device 150 transmits a valve open instruction to the vent valve 22 after the fuel shut-off valve 4, the second fuel shut-off valve 24, and the fuel injection valve 106 are closed by the shutdown of the gas engine 100. The vent valve 22 receives the valve open instruction and is opened. Therefore, as shown in FIG. 8B, each of the fuel shut-off valve 4, the second fuel shut-off valve 24, the purge valve 20, the second purge valve 34, the second vent valve 36, and the fuel injection valve 106 is in a closed state, and the vent valve 22 is in an open state. Then, a part of the gas fuel F remaining in the first purge target section X1 is discharged to the atmosphere via the vent line 8.

In the second opening step S13, the second vent valve 36 is opened after the opening step S12. In the second embodiment, the control device 150 transmits a valve open instruction to the second vent valve 36 after the vent valve 22 is opened. The second vent valve 36 receives the valve open instruction and is opened. Therefore, as shown in FIG. 8C, each of the fuel shut-off valve 4, the second fuel shut-off valve 24, the purge valve 20, the second purge valve 34, and the fuel injection valve 106 is in a closed state, and the vent valve 22 and the second vent valve 36 are in an open state. Then, a part of the gas fuel F remaining in the second purge target section X2 is discharged to the atmosphere via the second vent line 28.

In the inert gas supplying step S14, the vent valve 22 and the second vent valve 36 are closed, and the purge valve 20 and the second purge valve 34 are opened after the second opening step S13. In the second embodiment, after the second vent valve 36 is opened, a valve close instruction is transmitted to the vent valve 22 and the second vent valve 36, and a valve open instruction is transmitted to the purge valve 20 and the second purge valve 34. The vent valve 22 and the second vent valve 36 receive the valve close instruction and are closed. The purge valve 20 and the second purge valve 34 receive the valve open instruction and are opened. The purge valve 20 is opened after the second purge valve 34 is opened. Therefore, as shown in FIG. 8D, each of the fuel shut-off valve 4, the second fuel shut-off valve 24, the vent valve 22, the second vent valve 36, and the fuel injection valve 106 is in a closed state, and the purge valve 20 and the second purge valve 34 are in an open state. Then, the inert gas Gn is supplied to the fuel line 2.

In the mixing step S15, the purge valve 20 and the second purge valve 34 are closed after the inert gas supplying step S14 to mix the inert gas Gn and the gas fuel F. In the second embodiment, the control device 150 transmits the valve close instruction to the purge valve 20 and the second purge valve 34 after the purge valve 20 is opened. The purge valve 20 and the second purge valve 34 receive the valve close instruction and are closed. Therefore, as shown in FIG. 8E, each of the fuel shut-off valve 4, the purge valve 20, the vent valve 22, the second fuel shut-off valve 24, the second purge valve 34, the second vent valve 36, and the fuel injection valve 106 is in a closed state, and each of the first purge target section X1 and the second purge target section X2 is in a sealed state. Further, the control device 150 maintains the sealed state of the first purge target section X1 and the sealed state of the second purge target section X2 for a predetermined time. The predetermined time may be a constant value set in advance or may be a variable determined based on the measured value of the pressure sensor 80 or the second pressure sensor 32. The predetermined time for bringing the first purge target section X1 in the sealed state may be different from the predetermined time for bringing the second purge target section X2 in the sealed state. In a case where the sealed state of the first purge target section X1 and the sealed state of the second purge target section X2 are maintained for the predetermined time, the gas fuel F and the inert gas Gn are sufficiently mixed in each of the first purge target section X1 and the second purge target section X2.

In the determination step S16, it is determined whether or not an abnormality has occurred in at least one of the vent valve 22 and the fuel injection valve 106 based on the rate of decrease in the measured value of the pressure sensor 80 between the mixing step S15 and the discharging step S17. At the same time, in the determination step S16, it is determined whether or not an abnormality has occurred in any of the fuel shut-off valve 4, the second fuel shut-off valve 24, the second purge valve 34, and the second vent valve 36 based on the rate of decrease in the measured value of the second pressure sensor 32. In the second embodiment, the control device 150 acquires the measured value of the pressure sensor 80 while the first purge target section X1 is in the sealed state. At the same time, the control device 150 acquires the measured value of the second pressure sensor 32 while the second purge target section X2 is in the sealed state. Then, the control device 150 calculates the rate of decrease in the measured value of the pressure sensor 80, and determines that an abnormality has occurred in at least one of the vent valve 22 and the fuel injection valve 106 in a case where the calculated rate of decrease is larger than a value set in advance. Similarly, the control device 150 calculates the rate of decrease in the measured value of the second pressure sensor 32, and determines that an abnormality has occurred in any of the fuel shut-off valve 4, the second fuel shut-off valve 24, the second purge valve 34, and the second vent valve 36 in a case where the calculated rate of decrease is larger than a value set in advance. In some embodiments, the operation method further includes a notification step of notifying of the occurrence of the abnormality in a case where it is determined that the abnormality has occurred in the determination step S16.

In the discharging step S17, the vent valve 22 and the second vent valve 36 are opened after the mixing step S15. In the second embodiment, the control device 150 transmits the valve open instruction to the vent valve 22 and the second vent valve 36 after a predetermined time has elapsed since the first purge target section X1 and the second purge target section X2 are in the sealed state. The vent valve 22 and the second vent valve 36 receive the valve open instruction and are opened. The second vent valve 36 is opened after the vent valve 22 is opened. Therefore, as shown in FIG. 8F, each of the fuel shut-off valve 4, the purge valve 20, the second purge valve 34, and the fuel injection valve 106 is in the closed state, and the vent valve 22 and the second vent valve 36 are brought into the open state. Then, the gas fuel F included in the first purge target section X1 is discharged to the atmosphere together with the inert gas Gn via the vent line 8, and the gas fuel F included in the second purge target section X2 is discharged to the atmosphere together with the inert gas Gn via the second vent line 28.

In the purge completion determination step S18, it is determined that the gas fuel F has been discharged when the number of times the discharging step S17 has been executed exceeds a predetermined number of times (purge completion determination step S18: Yes) after the discharging step S17, and the process returns to the inert gas supplying step S14 when the number of times the discharging step S17 has been executed is equal to or less than the predetermined number of times (purge completion determination step S18: No).

In the purge completion determination step S18, it is determined whether or not the gas fuel F has been discharged based on the number of times the discharging step S17 is executed, but the present disclosure is not limited to this form. In some embodiments, in the purge completion determination step S18, after the discharging step S17, it is determined whether or not the gas fuel F has been discharged based on a rate of decrease in the measured value of the pressure sensor 80. Specifically, the control device 150 acquires the measured value of the pressure sensor 80 until a certain period of time elapses after the second vent valve 36 is opened. Then, the control device 150 calculates the rate of decrease in the measured value of the pressure sensor 80, and when the calculated rate of decrease is smaller than a value set in advance (purge completion determination step S18: Yes), it is determined that the gas fuel F has been discharged from the fuel line 2 and the engine-side fuel piping 104. When the rate of decrease in the measured value of the pressure sensor 80 is larger than the value set in advance (purge completion determination step S18: No), the control device 150 returns to the inert gas supplying step S14. In some embodiments, in the purge completion determination step S18, it is determined whether or not the gas fuel F has been discharged in consideration of the rate of decrease in the measured value of the second pressure sensor 32. In some embodiments, in the purge completion determination step S18, after the discharging step S17, it is determined whether or not the gas fuel F has been discharged based on the measured value of the concentration measurement device 90. That is, in the purge completion determination step S18, after the discharging step S17, when the measured value of the concentration measurement device 90 is lower than a predetermined concentration, it is determined that the gas fuel F has been discharged.

According to the operation method for the purge device 1 according to the second embodiment, when the gas engine 100 is stopped, the gas fuel F can be discharged from each of the first purge target section X1 and the second purge target section X2.

According to the operation method for the purge device 1 according to the second embodiment, in the inert gas supplying step S14, the second purge valve 34 and the purge valve 20 are opened in this order. Therefore, the pressure of the second purge target section X2 (on the upstream side of the fuel line 2 relative to the fuel shut-off valve 4) ≥ the pressure of the first purge target section X1 (on the downstream side of the fuel line 2 relative to the fuel shut-off valve 4) is satisfied, and the backflow of the inert gas Gn can be prevented.

According to the operation method for the purge device 1 according to the second embodiment, in the discharging step S17, the vent valve 22 and the second vent valve 36 are opened in this order. Therefore, the pressure of the second purge target section X2 (on the upstream side of the fuel line 2 relative to the fuel shut-off valve 4) ≥ the pressure of the first purge target section X1 (on the downstream side of the fuel line 2 relative to the fuel shut-off valve 4) is satisfied, and the backflow of the inert gas Gn can be prevented.

The contents described in each of the embodiments above are understood as follows, for example.
[1] A purge device (1) for a gas engine (100) according to the present disclosure includes:
   a fuel line (2) that is connected to an engine inlet pipe (116) located most upstream in engine-side fuel piping (104) of the gas engine, the fuel line being for supplying a gas fuel (F) to the gas engine;
   a fuel shut-off valve (4) that is provided in the fuel line;
   a purge line (6) that is connected to a purge line connection portion (10) on a downstream side of the fuel line relative to the fuel shut-off valve, the purge line being for supplying an inert gas (Gn) to the fuel line and the engine-side fuel piping; and
   a vent line (8) for discharging the gas fuel from the fuel line and the engine-side fuel piping, the vent line being connected to a vent line connection portion (12) on a downstream side of the fuel line relative to the fuel shut-off valve.

According to the configuration described in the above [1], since the vent line is connected to the fuel line, the vent line is disposed apart from the gas engine, and interference with members constituting an outer peripheral portion of the gas engine and members disposed around the gas engine is suppressed. Therefore, attachment to the gas engine is facilitated.

[2] In some embodiments, in the configuration described in the above [1], the purge device further includes:
a second fuel shut-off valve (24) that is provided on an upstream side of the fuel line relative to the fuel shut-off valve;
a second purge line (26) that is connected to the fuel line between the fuel shut-off valve and the second fuel shut-off valve, the second purge line being for supplying an inert gas (Gn) to the fuel line; and
a second vent line (28) that is connected to the fuel line between the fuel shut-off valve and the second fuel shut-off valve, the second vent line being for discharging the gas fuel from the fuel line.

According to the configuration described in the above [2], the gas fuel contained in a portion of the fuel line between the fuel shut-off valve and the second fuel shut-off valve can be discharged.

[3] In some embodiments, in the configuration described in the above [1] or [2], the purge device further includes
a mixing promotion device (70) that is provided on an upstream side of the fuel line relative to a fuel injection valve (106) provided on a downstream side of the fuel line relative to the fuel shut-off valve.

According to the configuration of the above [3], when the inert gas is supplied to the fuel line or the engine-side fuel piping, the mixing of the inert gas and the gas fuel can be promoted, and the discharge of the gas fuel from the fuel line or the engine-side fuel piping can be accelerated.

[4] In some embodiments, in the configuration described in the above [3],
the purge line connection portion divides a region from the fuel shut-off valve to the fuel injection valve into a first region (R1) and a second region (R2) larger than the first region, and
the mixing promotion device is disposed on a side of the second region closer to the purge line connection portion.

According to the configuration of the above [4], the inert gas flowing in from the purge line connection portion flows through the mixing promotion device and then flows toward the side of the second region opposite to the purge line connection portion. Therefore, since a space for promoting the mixing of the inert gas and the gas fuel is largely secured, the mixing of the inert gas and the gas fuel can be efficiently performed.

[5] In some embodiments, in the configuration described in any one of the above [1] to [4],
the fuel line includes a flexible pipe (126) disposed between the engine inlet pipe and the vent line connection portion.

According to the configuration of the above [5], the transmission of the vibration of the gas engine to the vent line is suppressed, and the damage to the vent line can be suppressed.

[6] In some embodiments, in the configuration described in any one of the above [1] to [5],
the purge device further includes a check valve (60) that is provided in the vent line.

According to the configuration of the above [6], the inflow of the gas (atmosphere) outside the purge device into the fuel line via the vent line can be prevented.

[7] In some embodiments, in the configuration described in the above [2],
the purge device further includes a second check valve (30) that is provided in the second vent line.

According to the configuration of the above [7], the inflow of the gas (atmosphere) outside the purge device into the fuel line via the second vent line can be prevented.

[8] In some embodiments, in the configuration described in any one of the above [1] to [7],
the vent line is disposed above the fuel line.

According to the configuration of the above [8], in a case where the gas fuel is a lightweight gas fuel such as hydrogen gas, the gas fuel is easily caused to flow into the vent line.

[9] In some embodiments, in the configuration described in the above [2] or [7],
the second vent line is disposed above the fuel line.

According to the configuration of the above [9], in a case where the gas fuel is a lightweight gas fuel such as hydrogen gas, the gas fuel is easily caused to flow into the second vent line.

[10] In some embodiments, in the configuration described in any one of the above [1] to [9],
the purge device further includes a pressure sensor (80) that is provided on a downstream side of the fuel line relative to the fuel shut-off valve.

According to the configuration of the above [10], based on the measured value of the pressure sensor, it is possible to detect whether or not an abnormality has occurred in the fuel shut-off valve or the like, and to confirm whether or not the gas fuel has been discharged from the fuel line and the engine-side fuel piping via the vent line.

[11] In some embodiments, in the configuration described in any one of the above [2], [7], and [9],
the purge device further includes a second pressure sensor (32) that is provided in the fuel line between the fuel shut-off valve and the second fuel shut-off valve.

According to the configuration of the above [11], based on the measured value of the second pressure sensor, it is possible to detect whether or not an abnormality has occurred in the fuel shut-off valve, the second fuel shut-off valve, or the like, and to confirm whether or not the gas fuel has been discharged from the fuel line via the second vent line.

[12] In some embodiments, in the configuration described in any one of the above [1] to [11],
the purge device further includes a concentration measurement device (90) that is provided in the engine-side fuel piping on an upstream side of a fuel injection valve (106) provided in the engine-side fuel piping and that measures a concentration of the gas fuel.

In a case where the vent line connection portion is located on the downstream side of the fuel line relative to the fuel shut-off valve and the purge line connection portion is located on the downstream side of the fuel line relative to the fuel shut-off valve, the gas fuel in the engine-side fuel piping is less likely to be discharged than the gas fuel in the fuel line. According to the configuration of the above [12], it is possible to confirm that the gas fuel is discharged from the engine-side fuel piping based on the measured value of the concentration measurement device.

[13] An operation method for a purge device (1) according to the present disclosure is an operation method for a purge device including:
a fuel line (2) that is connected to an engine inlet pipe (116) located most upstream in engine-side fuel piping (104) of a gas engine (100), the fuel line being for supplying a gas fuel (F) to the gas engine;
a fuel shut-off valve (4) that is provided in the fuel line;
a purge line (6) that is connected to a purge line connection portion (10) on a downstream side of the fuel line relative to the fuel shut-off valve, the purge line being for supplying an inert gas (Gn) to the fuel line and the engine-side fuel piping;
a vent line (8) for discharging the gas fuel from the fuel line and the engine-side fuel piping, the vent line being connected to a vent line connection portion (12) on a downstream side of the fuel line relative to the fuel shut-off valve;
a purge valve (20) that is provided in the purge line; and
a vent valve (22) that is provided in the vent line, the operation method including:
   an engine stopping step (S1) of closing the fuel shut-off valve and a fuel injection valve provided in the engine-side fuel piping;
   an opening step (S2) of opening the vent valve after the engine stopping step;
   an inert gas supplying step (S3) of closing the vent valve and opening the purge valve after the opening step;
   a mixing step (S4) of closing the purge valve to mix the inert gas and the gas fuel after the inert gas supplying step; and
   a discharging step (S6) of opening the vent valve after the mixing step.

According to the method of the above [13], when the gas engine is stopped, the gas fuel can be discharged from the fuel line and the engine-side fuel piping.

[14] An operation method for a purge device according to the present disclosure is an operation method for a purge device including:
a fuel line (2) that is connected to an engine inlet pipe (116) located most upstream in engine-side fuel piping (104) of a gas engine (100), the fuel line being for supplying a gas fuel (F) to the gas engine;
a fuel shut-off valve (4) that is provided in the fuel line;
a second fuel shut-off valve (24) that is provided on an upstream side of the fuel line relative to the fuel shut-off valve;
a purge line (6) that is connected to a purge line connection portion (10) on a downstream side of the fuel line relative to the fuel shut-off valve, the purge line being for supplying an inert gas (Gn) to the fuel line and the engine-side fuel piping;
a second purge line (26) that is connected to the fuel line between the fuel shut-off valve and the second fuel shut-off valve, the second purge line being for supplying an inert gas (Gn) to the fuel line;
a vent line (8) for discharging the gas fuel from the fuel line and the engine-side fuel piping, the vent line being connected to a vent line connection portion (12) on a downstream side of the fuel line relative to the fuel shut-off valve;
a second vent line (28) that is connected to the fuel line between the fuel shut-off valve and the second fuel shut-off valve, the second vent line being for discharging the gas fuel from the fuel line;
a purge valve (20) that is provided in the purge line;
a second purge valve (34) that is provided in the second purge line;
a vent valve (22) that is provided in the vent line; and
a second vent valve (36) that is provided in the second vent line, the operation method including:
   an engine stopping step (S11) of closing the fuel shut-off valve, the second fuel shut-off valve, and a fuel injection valve provided in the engine-side fuel piping;
   an opening step (S12) of opening the vent valve after the engine stopping step;
   a second opening step (S13) of opening the second vent valve after the opening step;
   an inert gas supplying step (S14) of closing the vent valve and the second vent valve and opening the purge valve and the second purge valve after the second opening step;
   a mixing step (S15) of closing the purge valve and the second purge valve to mix the inert gas and the gas fuel after the inert gas supplying step; and
   a discharging step (S17) of opening the vent valve and the second vent valve after the mixing step.

According to the method of the above [14], when the gas engine is stopped, the gas fuel can be discharged from the fuel line and the engine-side fuel piping.

[15] In some embodiments, in the method described in the above [13] or [14],
the purge device further includes a pressure sensor (80) that is provided on a downstream side of the fuel line relative to the fuel shut-off valve, and
the operation method further includes, between the mixing step and the discharging step, a determination step (S5) of determining whether or not an abnormality has occurred in at least one of the vent valve and the fuel injection valve based on a rate of decrease in a measured value of the pressure sensor.

According to the method of the above [15], it is possible to know whether or not an abnormality has occurred in at least one of the vent valve and the fuel injection valve.

[16] In some embodiments, in the method described in the above [13] or [14],
the operation method further includes, after the discharging step, a purge completion determination step of determining that the gas fuel has been discharged when the number of times the discharging step has been executed exceeds a predetermined number of times, and returning to the inert gas supplying step when the number of times the discharging step has been executed is equal to or less than the predetermined number of times.

According to the method of the above [16], a timing for ending the operation of the purge device can be set.

[17] In some embodiments, in the method described in the above [13] or [14],
the purge device further includes a concentration measurement device that is provided in the engine-side fuel piping on an upstream side of a fuel injection valve provided in the engine-side fuel piping and that measures a concentration of the gas fuel, and
the operation method further includes, after the discharging step, a purge completion determination step of determining that the gas fuel has been discharged based on a measured value of the concentration measurement device.

According to the method of the above [17], a timing for ending the operation of the purge device can be set.

[18] In some embodiments, in the method described in the above [13] or [14],
the purge device further includes a pressure sensor (80) that is provided on a downstream side of the fuel line relative to the fuel shut-off valve, and
the operation method further includes, after the discharging step, a purge completion determination step (S7) of determining whether or not the gas fuel has been discharged based on a rate of decrease in a measured value of the pressure sensor.

According to the method of the above [18], a timing for ending the operation of the purge device can be set.

[19] In some embodiments, in the method described in the above [14],
in the inert gas supplying step, the purge valve is opened after the second purge valve is opened.

According to the method of the above [19], since a relationship of a pressure on the upstream side of the fuel line relative to the fuel shut-off valve ≥ a pressure on the downstream side of the fuel line relative to the fuel shut-off valve can be satisfied, backflow of the inert gas can be prevented.

[20] In some embodiments, in the method described in the above [14] or [19],
in the discharging step, the second vent valve is opened after the vent valve is opened.

According to the method described in the above [20], since a relationship of a pressure on the upstream side of the fuel line relative to the fuel shut-off valve ≥ a pressure on the downstream side of the fuel line relative to the fuel shut-off valve can be satisfied, backflow of the inert gas can be prevented.

### Reference Signs List

1: purge device
2: fuel line
4: fuel shut-off valve
6: purge line
8: vent line
10: purge line connection portion
11: gas engine-side purge line connection portion
12: vent line connection portion
20: purge valve
22: vent valve
24: second fuel shut-off valve
26: second purge line
27: second purge line connection portion
28: second vent line
29: second vent line connection portion
30: second check valve
32: second pressure sensor
34: second purge valve
36: second vent valve
50: fuel supply source
52: inert gas supply source
60: check valve
70: mixing promotion device
80: pressure sensor
90: concentration measurement device
100: gas engine
101: combustion chamber
104: engine-side fuel piping
106: fuel injection valve
112: piston
114: cylinder head
116: engine inlet pipe
118: header pipe
120: branch pipe
122: inlet of engine-side fuel piping
124: outlet of engine-side fuel piping
126: flexible pipe
150: control device
F: gas fuel
Gn: inert gas
R1: first region
R2: second region
S1: engine stopping step (first embodiment)
S2: opening step (first embodiment)
S3: inert gas supplying step (first embodiment)
S4: mixing step (first embodiment)
S5: determination step (first embodiment)
S6: discharging step (first embodiment)
S7: purge completion determination step (first embodiment)
S11: engine stopping step (second embodiment)
S12: opening step (second embodiment)
S13: second opening step (second embodiment)
S14: inert gas supplying step (second embodiment)
S15: mixing step (second embodiment)
S16: determination step (second embodiment)
S17: discharging step (second embodiment)
S18: purge completion determination step (second embodiment)

## Claims

1. A purge device for a gas engine, the purge device comprising:
a fuel line that is connected to an engine inlet pipe located most upstream in engine-side fuel piping of the gas engine, the fuel line being for supplying a gas fuel to the gas engine;
a fuel shut-off valve that is provided in the fuel line;
a purge line that is connected to a purge line connection portion on a downstream side of the fuel line relative to the fuel shut-off valve, the purge line being for supplying an inert gas to the fuel line and the engine-side fuel piping; and
a vent line for discharging the gas fuel from the fuel line and the engine-side fuel piping, the vent line being connected to a vent line connection portion on a downstream side of the fuel line relative to the fuel shut-off valve.

2. The purge device for a gas engine according to Claim 1, further comprising:
a second fuel shut-off valve that is provided on an upstream side of the fuel line relative to the fuel shut-off valve;
a second purge line that is connected to the fuel line between the fuel shut-off valve and the second fuel shut-off valve, the second purge line being for supplying an inert gas to the fuel line; and
a second vent line that is connected to the fuel line between the fuel shut-off valve and the second fuel shut-off valve, the second vent line being for discharging the gas fuel from the fuel line.

3. The purge device for a gas engine according to Claim 1 or 2, further comprising a mixing promotion device that is provided on an upstream side of the fuel line relative to a fuel injection valve provided on a downstream side of the fuel line relative to the fuel shut-off valve.

4. The purge device for a gas engine according to Claim 3,
wherein the purge line connection portion divides a region from the fuel shut-off valve to the fuel injection valve into a first region and a second region larger than the first region, and
the mixing promotion device is disposed on a side of the second region closer to the purge line connection portion.

5. The purge device for a gas engine according to Claim 1 or 2,
wherein the fuel line includes a flexible pipe disposed between the engine inlet pipe and the vent line connection portion.

6. The purge device for a gas engine according to Claim 1 or 2, further comprising a check valve that is provided in the vent line.

7. The purge device for a gas engine according to Claim 2, further comprising a second check valve that is provided in the second vent line.

8. The purge device for a gas engine according to Claim 1 or 2,
wherein the vent line is disposed above the fuel line.

9. The purge device for a gas engine according to Claim 2 or 7,
wherein the second vent line is disposed above the fuel line.

10. The purge device for a gas engine according to Claim 1 or 2, further comprising a pressure sensor that is provided on a downstream side of the fuel line relative to the fuel shut-off valve.

11. The purge device for a gas engine according to Claim 2 or 7, further comprising a second pressure sensor that is provided in the fuel line between the fuel shut-off valve and the second fuel shut-off valve.

12. The purge device for a gas engine according to Claim 1 or 2, further comprising a concentration measurement device that is provided in the engine-side fuel piping on an upstream side of a fuel injection valve provided in the engine-side fuel piping and that measures a concentration of the gas fuel.

13. An operation method for a purge device including
a fuel line that is connected to an engine inlet pipe located most upstream in engine-side fuel piping of a gas engine, the fuel line being for supplying a gas fuel to the gas engine,
a fuel shut-off valve that is provided in the fuel line,
a purge line that is connected to a purge line connection portion on a downstream side of the fuel line relative to the fuel shut-off valve, the purge line being for supplying an inert gas to the fuel line and the engine-side fuel piping,
a vent line for discharging the gas fuel from the fuel line and the engine-side fuel piping, the vent line being connected to a vent line connection portion on a downstream side of the fuel line relative to the fuel shut-off valve,
a purge valve that is provided in the purge line, and
a vent valve that is provided in the vent line, the operation method comprising:
an engine stopping step of closing the fuel shut-off valve and a fuel injection valve provided in the engine-side fuel piping;
an opening step of opening the vent valve after the engine stopping step;
an inert gas supplying step of closing the vent valve and opening the purge valve after the opening step;
a mixing step of closing the purge valve to mix the inert gas and the gas fuel after the inert gas supplying step; and
a discharging step of opening the vent valve after the mixing step.

14. An operation method for a purge device including
a fuel line that is connected to an engine inlet pipe located most upstream in engine-side fuel piping of a gas engine, the fuel line being for supplying a gas fuel to the gas engine,
a fuel shut-off valve that is provided in the fuel line,
a second fuel shut-off valve that is provided on an upstream side of the fuel line relative to the fuel shut-off valve,
a purge line that is connected to a purge line connection portion on a downstream side of the fuel line relative to the fuel shut-off valve, the purge line being for supplying an inert gas to the fuel line and the engine-side fuel piping,
a second purge line that is connected to the fuel line between the fuel shut-off valve and the second fuel shut-off valve, the second purge line being for supplying an inert gas to the fuel line,
a vent line for discharging the gas fuel from the fuel line and the engine-side fuel piping, the vent line being connected to a vent line connection portion on a downstream side of the fuel line relative to the fuel shut-off valve,
a second vent line that is connected to the fuel line between the fuel shut-off valve and the second fuel shut-off valve, the second vent line being for discharging the gas fuel from the fuel line,
a purge valve that is provided in the purge line,
a second purge valve that is provided in the second purge line,
a vent valve that is provided in the vent line, and
a second vent valve that is provided in the second vent line, the operation method comprising:
an engine stopping step of closing the fuel shut-off valve, the second fuel shut-off valve, and a fuel injection valve provided in the engine-side fuel piping;
an opening step of opening the vent valve after the engine stopping step;
a second opening step of opening the second vent valve after the opening step;
an inert gas supplying step of closing the vent valve and the second vent valve and opening the purge valve and the second purge valve after the second opening step;
a mixing step of closing the purge valve and the second purge valve to mix the inert gas and the gas fuel after the inert gas supplying step; and
a discharging step of opening the vent valve and the second vent valve after the mixing step.

15. The operation method for a purge device according to Claim 13 or 14,
wherein the purge device further includes a pressure sensor that is provided on a downstream side of the fuel line relative to the fuel shut-off valve, and
the operation method further comprises, between the mixing step and the discharging step, a determination step of determining whether or not an abnormality has occurred in at least one of the vent valve and the fuel injection valve based on a rate of decrease in a measured value of the pressure sensor.

16. The operation method for a purge device according to Claim 13 or 14, further comprising, after the discharging step, a purge completion determination step of determining that the gas fuel has been discharged when the number of times the discharging step has been executed exceeds a predetermined number of times, and returning to the inert gas supplying step when the number of times the discharging step has been executed is equal to or less than the predetermined number of times.

17. The operation method for a purge device according to Claim 13 or 14,
wherein the purge device further includes a concentration measurement device that is provided in the engine-side fuel piping on an upstream side of a fuel injection valve provided in the engine-side fuel piping and that measures a concentration of the gas fuel, and
the operation method further comprises, after the discharging step, a purge completion determination step of determining that the gas fuel has been discharged based on a measured value of the concentration measurement device.

18. The operation method for a purge device according to Claim 13 or 14,
wherein the purge device further includes a pressure sensor that is provided on a downstream side of the fuel line relative to the fuel shut-off valve, and
the operation method further comprises, after the discharging step, a purge completion determination step of determining that the gas fuel has been discharged based on a rate of decrease in a measured value of the pressure sensor.

19. The operation method for a purge device according to Claim 14,
wherein, in the inert gas supplying step, the purge valve is opened after the second purge valve is opened.

20. The operation method for a purge device according to Claim 14,
wherein, in the discharging step, the second vent valve is opened after the vent valve is opened.
